# EUROPEAN PATENT APPLICATION

(11) **EP 4 810 216 A1**
(43) Date of publication of application: **23.09.2026**
(21) Application number: 25382255.5
(22) Date of filing: 19.03.2025
(51) Int. Cl.: B29B 11/16, B29B 15/12

(54) **METHOD FOR PRODUCING A PRE-IMPREGNATED REINFORCEMENT FABRIC FOR BUILDING A PREFORM ELEMENT**

(71) Applicant: Siemens Gamesa Renewable Energy Innovation & Technology S.L., 31621 Sarriguren (Navarra) (ES)
(72) Inventor: Hierro-Olabarria Salgado, Francisco Javier, 01400 Llodio (ES)
(74) Representative: SGRE-Association

(57) **Abstract**

The invention relates to a method for producing a pre-impregnated reinforcement fabric for building a preform element, with the steps:
- Building a layer arrangement from a reinforcement fabric layer (1) composed of weaved or stitched fibers (19) and a perforated polymer film layer (3) arranged in contact to the reinforcement fabric layer (1),
- applying heat to the layer arrangement for providing at least a tacky surface of the polymer film layer (3) such that the polymer film layer surface (3) adheres to the contacted reinforcement fabric layer (1),
- cooling the layer arrangement.

## Description

The invention refers to a method for producing a pre-impregnated reinforcement fabric for building a preform element.

Such preform elements are used for building items being composed of a number of separate preform elements embedded in a polymer matrix, like a wind turbine blade. A composite item, which item can also be named as a composite material, is typically manufactured by laying up reinforcement material in a mold, wherein the reinforcement material builds a stack. Afterwards a polymer is infused and hardened or cured to form the final item. The amount of reinforcement material usually is large and may become significant in the case of large items like a wind turbine blade or a boat body. To avoid extending the cycle time by depositing large amounts of reinforcement material in the mold, the preform technology was developed, wherein the reinforcement elements, i.e**.** the preform elements, are pre-shaped and are arranged as preformed building elements in the mold. To manufacture such a preform element, a number of reinforcement fabric layers are arranged in a preform mold. Thereafter a binder resin is disposed and melted to a certain degree in order to fixate the reinforcement fabric layers after bonding by means of melting or curing the binder resin. Currently, the binder is applied to the reinforcement fabric layer stack in a powder form by scattering it on top of the fabric layer, which is arranged below a scattering unit and receives the powder binder by gravity. The powder binder is then heated by a heating unit for softening or melting the powder binder into the fabric and to adhere to it after curing or melting. Disposing the binder is a cost-effective step within the procedure and is not accurate and sufficiently controllable to retain the binder in a precise amount and at locations where needed, seen over the whole area of the stack in the mold, which may have several square meters in case of a preform element for producing a wind turbine blade. This may cause an inhomogeneous fixation of the reinforcement fabric layers over the stack and to later problems when transporting, mounting and further processing such a preform element. Further, during storage and transportation of such a preform element, the binder may migrate and cause unwanted effects in the material such as dry spots, a lack of permeability, dispersion during processing, poor interlaminar strength etc.

It is an object of the invention to provide a possibility for an improved manufacturing method.

For addressing the object of the invention provides a method for producing a pre-impregnated reinforcement fabric for building a preform element, with the steps:
- Building a layer arrangement from a reinforcement fabric layer composed of weaved or stitched fibers and a perforated polymer film layer arranged in contact to the reinforcement fabric layer,
- applying heat to the layer arrangement for providing at least a tacky surface of the polymer film layer such that the polymer film layer surface adheres to the contacted reinforcement fabric layer,
- cooling the layer arrangement.

The invention proposes manufacturing a pre-impregnated reinforcement fabric, which is composed of several separate layers. In the first step a layer arrangement is built on a respective support, which layer arrangement is a reinforcement fabric layer composed of weaved or stitched fibers, and a perforated polymer film layer arranged in contact to the fabric layer. Both layers build a two layer stack. In the second step, the layer arrangement is heated for providing at least a tacky surface of the polymer film layer such that the polymer film layer surface adheres to the contacted reinforcement fabric layer. After cooling the layer arrangement in the third step both layers are sufficiently fixated to each other building a pre-impregnated reinforcement fabric which is easy to handle and to process. A preform element is composed of several of such reinforcement fabric pieces.

The reinforcement fabric layer may be any kind of fabric, unidirectional or multiaxial, and may comprise one or more fiber layers, which are either weaved or stitched to fixate the respective layers. The polymer film layer may be perforated. This perforation can be realized for example by holes having a round or square shape, like a mesh or any other form of openings. This perforation is still present after heating the layer arrangement in the second step, which means that the polymer film layer is not completely molten and infused in the reinforcement fabric layer, but still has its basic form with the perforation holes or openings. This guarantees that, when finally the item is built by arranging a number of pre-impregnated reinforcement fabric pieces, an infused or casted fluid binder can flow through these perforation openings and spread in the whole arrangement and completely fill the final item manufacturing mold. The perforation, which is present when the infusion or casting process starts, allows the flow of this liquid matrix, wherein the perforated polymer film, after the infusion or casting it has stopped, completely melts and chemically reacts with the matrix during the heating of this arrangement after the infusion or casting in order to cure the binder, so that the perforated polymer layer is no longer present as a layer itself but is dissolved or liquidated.

By using a perforated polymer film layer of a meltable polymer, at which the amount per square meter can be controlled by the film thickness and the perforation diameter and the perforation hole density, an exact resin quantity can be controlled and edited to each reinforcement fabric layer. As no powder binder is used, the attached perforated polymer film layer acting as a binder guarantees a sufficiently homogeneous distribution of the binder over the area of the reinforcement fabric layer and a defined porosity and permeability of the produced reinforcement fabric. A preform built of several of such reinforcement fabric items therefore has a sufficient thickness permeability within its structural matrix, given by the perforations, wherein the fact that the polymer film layer melts and reacts during the production of the preform element guarantees that it gets integrated in the final polymer matrix without negatively interfering its mechanical properties or adding additional weight to the component. By attaching this perforated polymer film to the reinforcement fabric layer the latter is pre-impregnated.

Preferably the polymer film layer is molten by the application of heat, which means, that not only its surface is made slightly tacky, but that the polymer film layer is weakened completely in order to enhance its adherence to the fibers of the reinforcement fabric layer. The heating is performed such that, although the polymer film layer is molten, the perforation is still present after curing the perforated polymer film layer afterwards.

The reinforcement fabric layer may be composed of glass fibers or glass fiber bundles or carbon fiber or carbon fiber bundles. Also, a combination of glass and carbon fibers or bundles may be used. The fiber bundles are made of filaments or rovings. The reinforcement fabric layer may be composed of two or more different layers formed by rovings with the same orientation to give the reinforcement the desired properties, wherein the two or more layers are joined either by stitching or weaving, thereby forming the reinforcement fabric being multiaxial. If only one fiber layer is used for building the fabric, the fabric is unidirectional.

The polymer film layer is preferably a thermoplastic polymer, especially having an epoxy functional group or groups but also may be polyurethane, acrylic, polycarbonate or polyolefin based. It is not sticky or tacky at an ambient temperature up to for example 60°C. It should preferably have a melting temperature of 90°C to 140°C and a glass transition temperature of 40°C to 80°C. It is preferably anisotropic, not having any directionality in its properties, and fully homogeneous. The polymer film may be formed by conventional processing such as casting, extrusion or blowing, to a desired film thickness needed to control the amount of thermoplastic material deposited in the final reinforcement fabric. The film may be perforated or meshed in its final format, to provide the perforation having the requested permeability. The composition of the polymer film may preferably be a linear polymer composed of an amorphous thermoplastic epoxy, having hydroxyl groups in the backbone of the polymer chains to enhance attachment to the fiber coating material (sizing) and the polymer matrix material of the final composite item, typically a thermoset epoxy reactive liquid resin. But, as mentioned, also other thermoplastic polymers may be used.

The polymer film layer has preferably an areal weight of 4-40 g/m2, especially of 6-20 g/m² and preferably 8-50 g/m². Ideally approximately 10 g/m² are preferred. The areal weight is constant over the whole polymer film layer.

The heat for making the polymer film layer tacky may be applied by means of any appropriate heating device like an infrared heating device, alternatively by using a resistance heating device or a microwave heating device. Also, a heated roll for contacting the layer arrangement may be used.

After applying heat to the layer arrangement pressure may be applied to the heated layer arrangement by means of a pressure roller. The pressure allows for compacting the layer arrangement, wherein, just like the temperature, also this pressure can be precisely controlled to adjust the final properties of the reinforcement fabric.

As mentioned, in the third step the heated layer arrangement is cooled. This may be realized by a cooling device blowing cooling air on the layer arrangement.

The reinforcement fiber layer may be produced in a fiber layer production device and the polymer film layer is provided in the form of a roll, wherein both the reinforcement fiber layer coming from the fiber layer production device and the polymer film layer being unwound from the roll are arranged above each other on a conveyor belt by means of a tensioning roller, whereafter the heat is applied. In this embodiment the reinforcement fiber layer is produced on site, meaning that the reinforcement fiber layer is manufactured from respective fiber rovings directly before its further processing together with the polymer film layer, which is provided in form of a roll. Both the reinforcement fiber layer coming directly from the fiber layer production device and the polymer film layer, which is unwound from the roll, are arranged above each other on a conveyor belt by means of a tensioning roller. The conveyor belt moves synchronous with the movement of the reinforcement fabric layer and the polymer film layer, so that both can perfectly be arranged above each other. After connecting both layers, the heat is applied in order to firmly attach them under pressure.

In an alternative both the reinforcement fiber layer is provided in form of a roll and the polymer film layer is provided in form of a roll, wherein both the reinforcement fiber layer and the polymer film layer are unwound and arranged above each other on a conveyor belt by means of a tensioning roller, whereafter the heat is applied. In this embodiment also the reinforcement fiber layer is provided in form of a roll, meaning that the reinforcement fiber layer has been pre-manufactured elsewhere. Here, both layers are unwound from the respective roll and arranged above each other for building the layer stack, whereafter the heat is applied for attaching the layers.

Preferably, both the reinforcement fabric layer and the polymer film layer have the same width. The upper layer therefore completely covers the lower layer, so that, when the lower layer is the reinforcement fabric layer, it is fully covered by the polymeric film layer being arranged above. The final reinforcement fabric therefore comprises a pre-impregnation of the reinforcement fabric layer over the whole fabric surface. Preferably both layers have a width of 0,5 - 1,5 m.

In a further embodiment of the invention the finally built layer arrangement, which is the pre-impregnated reinforcement fabric, is either wound up to build a pre-impregnated reinforcement fabric roll, or the cured layer arrangement, which is the pre-impregnated reinforcement fabric, is cut into single layer arrangement sheets. Depending on the further processing, the cooled layer arrangement, i.e**.** the pre-impregnated reinforcement fabric may be wound up to build a roll, which can easily be stored and transported. For the further processing the pre-impregnated reinforcement fabric is unwound from the roll and cut into separate reinforcement fabric sheets, which are then separately processed for building a preform element. In the alternative, the cooled layer arrangement, i.e**.** the pre-impregnated reinforcement fabric is immediately cut into separate sheets after the cooling step, which sheets are then either stored or immediately further processed.

The invention further comprises a reinforcement fabric produced according to the method as described above.

Further, the invention refers to a method for producing a preform element for an item being composed of a number of separate prefrom elements embedded in a polymer matrix, with the following steps:
- providing a mold with a mold surface,
- arranging a stack of two or more sheets of a reinforcement fabrics as depicted above on the mold surface,
- applying heat to the stack for providing at least a tacky surface of the polymer film layer of each pre-impregnated reinforcement fabric sheet such that the polymer film layer surface of a sheet adheres to the contacted fabric layer of an adjacent sheet for fixating the sheets,
- cooling the stack.

For building the preform element a specific mold is used having a mold surface which defines the final form or shape of the preform element. On this mold surface a stack of two or more sheets of an inventive pre-impregnated reinforcement fabric as described above is arranged. Afterwards heat is applied to the stack for providing at least a tacky surface of the polymer film layer of each pre-impregnated reinforcement fabric sheet such that the polymer film layer surface of the sheet adheres to the contacted fabric layer of the adjacent sheet for fixating the sheets. As the pre-impregnated reinforcement fabric sheets are arranged such, that a fabric layer is followed by a polymer film layer which is followed by a fabric layer which again is followed by a polymer film layer etc., the whole stack is perfectly fixated, as a pre-impregnated reinforcement fabric is securely fixated to the adjacent and contacted pre-impregnated reinforcement fabric. In the final step the stack is cooled, so that the respective polymer film layer is hardened again and the whole stack is firmly fixated in the shape defined by the mold surface. The preform element may then be either transported and stored or further processed.

This stack is preferable heated such that the polymer film layer is melted. This means, that not only the surfaces become a little bit tacky, but that the respective polymer film layers are heated and weakened over their thickness for a better wetting and adaption to the respective neighboring fabric surface in the overall form defined by the mold surface.

Finally, the invention refers to a preform element produced according to the method described above.

Other objects and features of the present invention will become apparent from the following detailed description considered in conjunction with the accompanying drawings. The drawings, however, are only principle sketches designed solely for the purpose of illustration and do not limit the invention. The drawings show:
figure 1 a perspective view of a reinforcement fabric layer,
figure 2 a perspective view of a perforated polymer film layer,
figure 3 a principal sketch of a first production arrangement for producing a pre-impregnated reinforcement fabric,
figure 4 a principal sketch of a second production arrangement for producing a pre-impregnated reinforcement fabric,
figure 5 a principled sketch of the production arrangement comprising an additional heating and compaction system,
figure 6 the principal sketch of the production arrangement comprising a heating unit in form of a heat roller and a compaction unit in form of a compaction roller,
figure 7 a principal sketch of the production arrangement comprising an additional cooling unit,
figure 8 the principal sketch of the reinforcement fabric layer and the perforated polymer film layer separated from each other,
figure 9 both layers of figure 8 when arranged above each other during heating and compaction,
figure 10 a final pre-impregnated reinforcement fabric produced after cooling the arrangement of figure 9,
figure 11 a principal sketch of a mold for producing a preform element,
figure 12 the principal sketch of several separate pre-impregnated reinforcement fabric sheets arranged in form of a stack in the mold shown in figure 11 during heating and compaction,
figure 13 a preform element produced with the arrangement of figure 12 after cooling,
figure 14 a principal sketch of a preform element according to figure 13 during its processing for building an item like a wind turbine blade during the infusion or casting step,
figure 15 the preform element of figure 14 after final infusion or casting during the heating process, and
figure 16 the finally built item made of the preform element and being totally embedded in a cured polymer matrix.

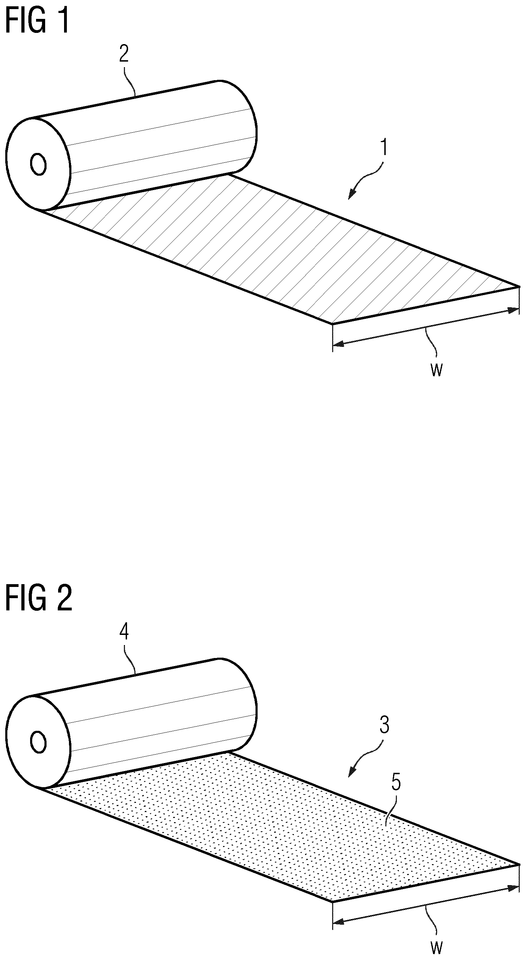

Figure 1 shows a principal sketch of a reinforcement fabric layer 1 wound up in a roll 2 having a width W. The reinforcement fabric layer 1 is typically composed of at least two layers of fiber bundles weaved or stitched together. The fiber bundles may be glass fiber bundles or carbon fiber bundles of filaments or rovings. Usually two different layers build the reinforcement fabric layer 1, wherein within one layer all bundles have the same orientation, but the layers are arranged crossed to each other to give the reinforcement fabric layer 1 the desired properties, meaning that it is a biaxial reinforcement fabric layer 1. If only one layer of fiber bundles builds the reinforcement fabric layer 1 the layer is unidirectional.

The reinforcement fabric layer 1 may be pre-fabricated elsewhere and will be delivered to the processing site in form of a roll, as shown in figure 1 and as described later. Alternatively, the reinforcement fabric may be produced directly on site by weaving or stitching the fiber bundles. The width W is typically between 0,5 and 1,5 m**.**

Figure 2 shows a principal sketch of a perforated polymer film layer 3, which is also wound up to build a roll 4. Also, this polymer film layer 3 is usually prefabricated. It is made of a solid polymer film of a homogeneous polymer material, which is anisotropic and has no directionality and its properties. It is preferred to use a thermoplastic polymer like epoxy, polyurethane, acrylic, polycarbonate or polyolefin. Preferably the polymer film layer 3 is not tacky or sticky up to temperatures of 60°. The glass transition temperature should range between 40°C to 80°C, the melting temperature should range between 90°C to 140°C. The film may be formed by conventional processes like casting, extrusion or blowing to a desired film thickness needed to control the amount of thermoplastic material deposited in the final material. The polymer film layer 3 is of the same width W as the reinforcement fabric layer 1, so that it fully covers the reinforcement fabric layer 1 when being arranged on top of it, as described later.

During production the polymer film is perforated, so that the perforated polymer film layer 3 as a perforation 5 realized by evenly distributed holes or openings over its area. These openings may be round or square openings or holes having a defined size and a defined distribution over the surface, so that by this perforation 5 the porosity or permeability of the polymer film layer 3 can be controlled. The intended areal weight of the polymer film layer 3 is between 6 - 40 g/m², preferably approximately 10 g/m². This areal weight is constant and uniform over the whole polymer film layer 3.

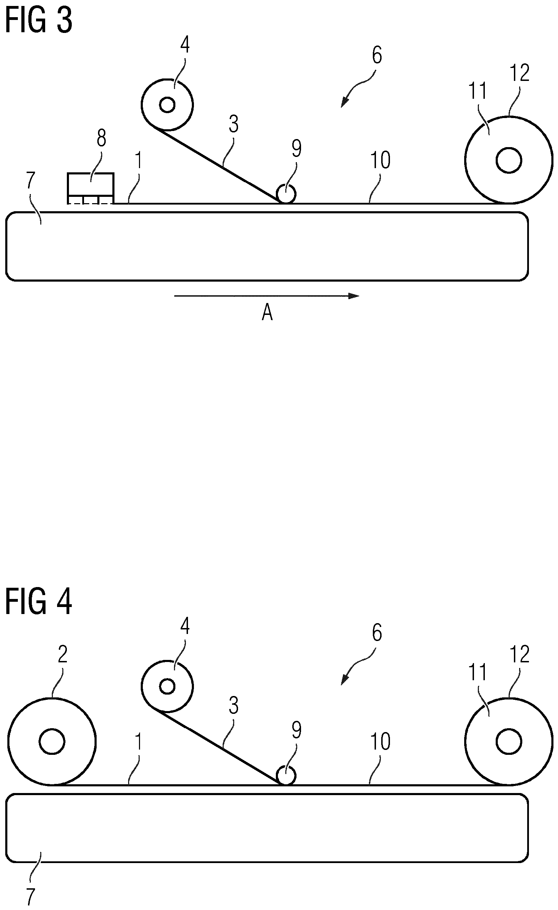

From a reinforcement fabric layer 1 as shown and the discussed in figure 1 and a perforated polymer film layer 3 as shown and discussed in figure 2 a pre-impregnated reinforcement fabric is built. A principal sketch of a pre-impregnated reinforcement fabric production device 6 is shown in figure 3. This pre-impregnated reinforcement fabric production device 6 comprises a conveyor belt 7. It further comprises a fiber layer production device 8, in which the reinforcement fiber layer 1 as shown in figure 1 is produced on site by weaving or stitching of respective glass or carbon fibers or fiber bundles provided in the form of rovings. The reinforcement fiber layer 1 is arranged on the circulating conveyor belt 7. Figure 3 further shows the roll for from which the polymer film layer 3 is unwound. The polymer film layer 3 is guided to the conveyor belt 7 and is arranged on top of the reinforcement fabric layer 1 by means of a tension roller 9, so that, seen in the process direction according to the arrow A, behind the tension roller 9 a layer stack 10 comprising the layers 1 and 3 is provided. This layer stack 10 is further processed, which further processing on the conveyor belt 7 is discussed later. After this further processing the final pre-impregnated reinforcement fabric 11 is finally manufactured and wound up to a roll 12 as shown in figure 3.

Figure 4 shows an alternative embodiment of such a pre-impregnated reinforcement fabric production device 6. This device also comprises a conveyor belt 7. Above this conveyor belt 7 a roll 2 of reinforcement fabric layer 1 is arranged, which reinforcement fabric layer 1 is arranged on top of the circulating conveyor belt 7. As already shown and explained in figure 3, a roll 4 of the polymer film layer 3 is provided, wherein the polymer layer 3 is unwound and arranged on top of the reinforcement fabric layer 1 by means of the tension roller 9 to build a stack 10, which is then further processed. The final pre-impregnated reinforcement fabric 11 s wound up to build a pre-impregnated fabric roll 12. So, in comparison of figure 4 to figure 3, in figure 4 a prefabricated and wound up reinforcement fabric layer 1 is used, wherein according to figure 3 this reinforcement fabric layer 1 is directly produced on site.

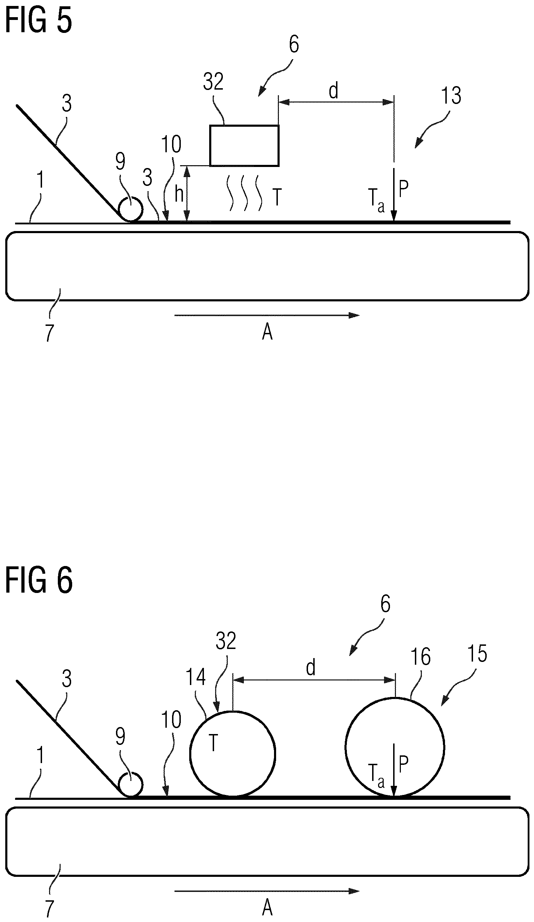

Figure 5 shows further details of a pre-impregnated reinforcement fabric production device 6. It shows the application of the polymer film layer 3 on the reinforcement fabric layer 1, which is shown in the form of a dashed line for illustration purposes. As already explained, after passing the tension roller 9 both layers 1 and 3 are arranged above each other and in contact with each other. The tension roller 9 is followed by a heating device 32 applying heat as symbolized by the reference T and the wave symbol to the layer stack 10. The heating device may be an infrared heating device, a resistance heating device, a microwave heating device or the like. The heating devices 32 is arranged in a specific height h above the layer stack 10 as shown. The speed of the conveyor belt 7 is adjusted such that the layer stack 10 moving underneath the heating device 32 remains long enough in the heating zone, so that the polymer film layer 3 gets sufficiently heated for softening or melting it in order to make it tacky or sticky, so that it wets and adheres to the underlying reinforcement fabric layer 1. The heating device 32 is controlled such that temperature T of the polymer film layer of 3 is in the range of 80°C to 140°C, to allow for the polymer film layer 3, which is not tacky or sticky at ambient temperature, to sufficiently soften or melt but also to avoid any damage to the polymeric material and the base reinforcement fabric layer 3 during this heating stage. In any case the heating is controlled such that the heated or melted polymer fabric layer 3 is still perforated, which means, that it keeps its openings or perforated structure also in this state. This is necessary to guarantee that after the final cooling, when the pre-impregnated reinforcement fabric is finally built, this final pre-impregnated reinforcement layer is still perforated and shows a defined porosity or permeability.

The heating device 32 is followed by a compaction device 13, which may be any appropriate compaction or pressure device like a pressure roll or something comparable. The compaction device 32 is sufficiently distanced by a distance d from the heating device 32, wherein the speed of the conveyor belt 7 is adjusted such that the heated layer stack 10 arrives at the compaction device 32 with a desired compaction temperature Ta. It urges a defined pressure P on the heated layer stack 10 for pressing the heated polymer film layer 3 on the underlying reinforcement fabric layer 1, so that the softened or melted polymer material of the polymer film layer 3 is pressed into the reinforcement fabric layer 1.

Figure 6 shows an alternative embodiment of a pre-impregnated reinforcement fabric production device 6, again comprising a conveyor belt 7 and the tension roller 9 for tensioning the reinforcement fabric layer 1 and the polymer film layer 3 to build a layer stack 10. It also comprises a heating device 32 which is here realized in the form of a heated roller 14 contacting the layer stack 10 respectively the upper polymer film layer 3 for a direct heating, as symbolized by the reference T. Distanced by the distance d, a compaction device 15 is shown, here realized in form of a compaction roller 16. This compaction roller 16 provides a defined pressure P on the heated layer stack 10 for further compacting it and for pressing the softened or melted polymeric material of the polymeric film layer 3 in the fabric of the underlying reinforcement fabric layer 1.

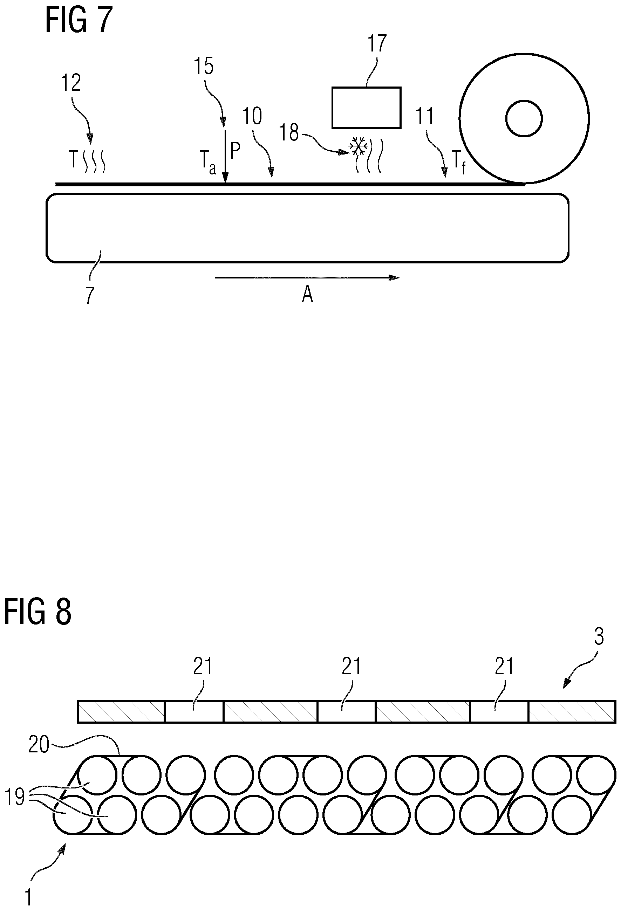

Figure 7 shows the pre-impregnated reinforcement fabric production device 6 with further details. It shows a cooling device 17 which cools the previously heated and compacted layer stack 10. The cooling device 17 follows the compaction device 15. The compaction device 15 is only shown in symbolized form, the same holds true for the heating device 32. The cooling device 17 is preferably a cooling air blowing device, which blows symbolized cooling air 18 on the still warm and compacted layer stack 10. After the cooling the polymer film layer 3 is no longer tacky or sticky, it has hardened, as shown by the ambient temperature reference Tf. In this stage the pre-impregnated reinforcement fabric 11 is built, in which the reinforcement fabric layer 1 is impregnated by the now hardened and fixated polymer film layer 3 which has infiltrated the reinforcement fabric layer 1 to a certain extent.

The figures 8 to 10 are principal sketches of the manufacturing of the pre-impregnated reinforcement layer 11. Figure 8 shows the reinforcement fabric layer 1 and the polymer film layer 3 before their connection. The reinforcement fabric layer 1 is composed of a number of fiber bundles 19 in form of rovings, which are stitched together by a yarn 20 for example. The reinforcement fabric layer 1 in this embodiment is a two layer fabric. The figure also shows the polymeric film layer 3 with perforation holes 21, which are all of the same size and shape and which are evenly distributed over the whole area of the polymeric film layer 3.

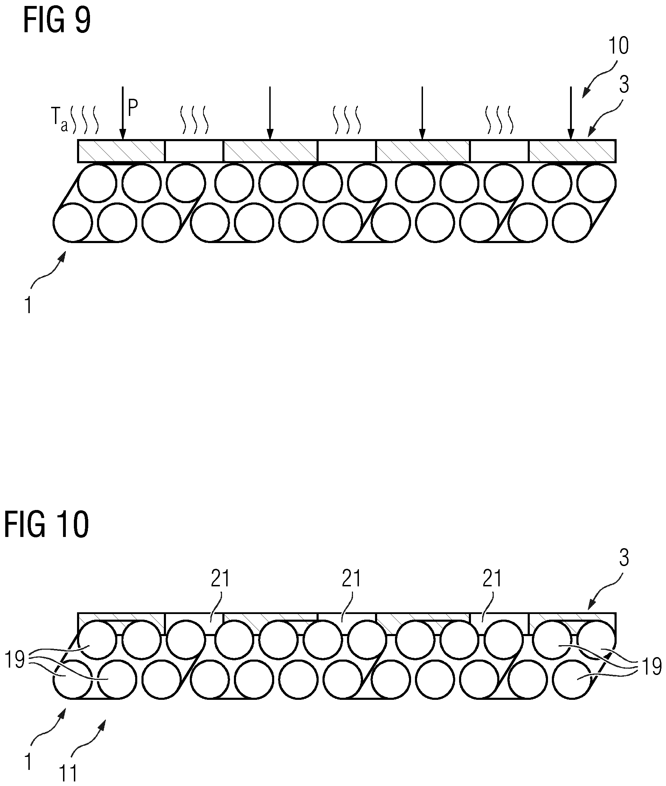

Figure 9 shows the reinforcement fabric layer 1 and the polymeric film layer 3 arranged on top of each other building the layer stack 10. In this stage the layer stack 10 has already been heated in the heating device 32, it has the compaction temperature Ta. By the compaction device 15 the pressure P is provided for contacting the layer stack 10, as shown, which is still warm as shown by the wave symbols. By this compaction the softened or melted polymer film layer 3 is slightly pressed into the fabric structure of the underlying reinforcement fabric layer 1, which state is shown in figure 10. This figure 10 shows the final pre-impregnated reinforcement fabric 11 after the final cooling in the cooling device 17. As shown, the polymeric film layer 3 is infiltrated into the reinforcement fabric layer 1, so that it adheres to the surface respectively the upper fiber bundles 19, as shown in figure 10. In addition, all perforation holes 21 are still given, so that the pre-impregnated reinforcement fabric 11 is still permeable and a liquid polymer binder can flow through the pre-impregnated reinforcement fabric 11 in the further processing.

The produced pre-impregnated reinforcement fabric 11 is, as already explained, finally wound up to form a roll 12, which can be stored. In the alternative, respective pre-impregnated reinforcement fabric sheets may be directly cut and will be stacked above each other for storing purpose.

For the further processing, such pre-impregnated reinforcement fabric sheets are needed for building a preformed element, which for example is needed for building a wind turbine blade. A pre-impregnated reinforcement fabric sheet has a defined width W and a defined length, depending on how long it is cut.

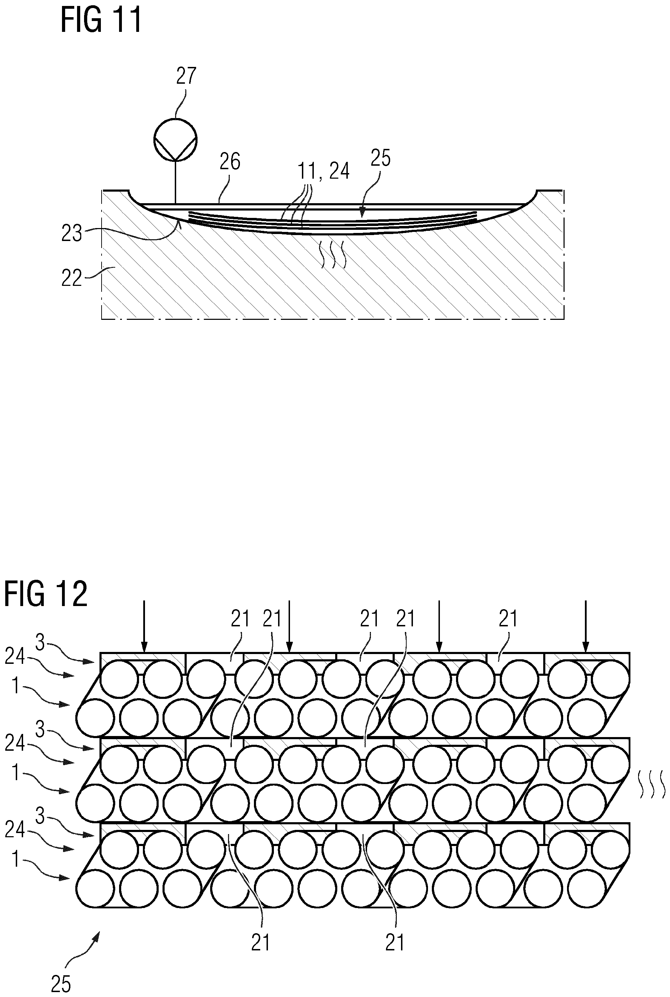

Figure 11 shows the further processing of the pre-impregnated reinforcement fabric 11 for building a preformed element. The figure shows a mold 22 having a mold surface 23 which in this embodiment is trough-like. On this mode surface 23 a number of separate pre-impregnated reinforcement fabric sheets 24, each being made of the pre-impregnated reinforcement fabric 11, are arranged in form of a stack 25. This stack 25 is covered by a vacuum bag 26. By means of a vacuum pump 27 a vacuum is provided underneath the vacuum bag 26, compacting the stack 25. In this stage heat may be applied, so that the respective polymer film layers 3 get tacky and can adhered to the adjacent reinforcement fabric layer 1. The heat is controlled such that the perforation holes remain open and the permeability through the stack is still given. A fluid polymer binder is then infused in the covered mold cavity comprising the stack 25, thereby infusing the stack 25 and embedding the pre-impregnated reinforcement fabric sheets 24 in the polymer matrix. After this infusion the mold surface 23 is heated, as shown by the wave symbol, so that the stack 25 and the infused polymeric binder is heated. By applying heat, the respective polymeric film layers 3 of each of the pre-impregnated reinforcement fabric sheets 24 are heated, together with the polymer binder. This heating makes the polymer film layer 3 to melt, so that they somehow dissolve in the liquid polymer binder, which, when sufficient heat is applied, starts to polymerize or cure. After this heating step and maybe an additional cooling the final preformed element is built and can be taken from the mold 22. Instead of a vacuum bag 26, it is also be possible to arrange a caul-plate above the stack 25 and press on its, or to use a separate male mold half pressing on the stack 25

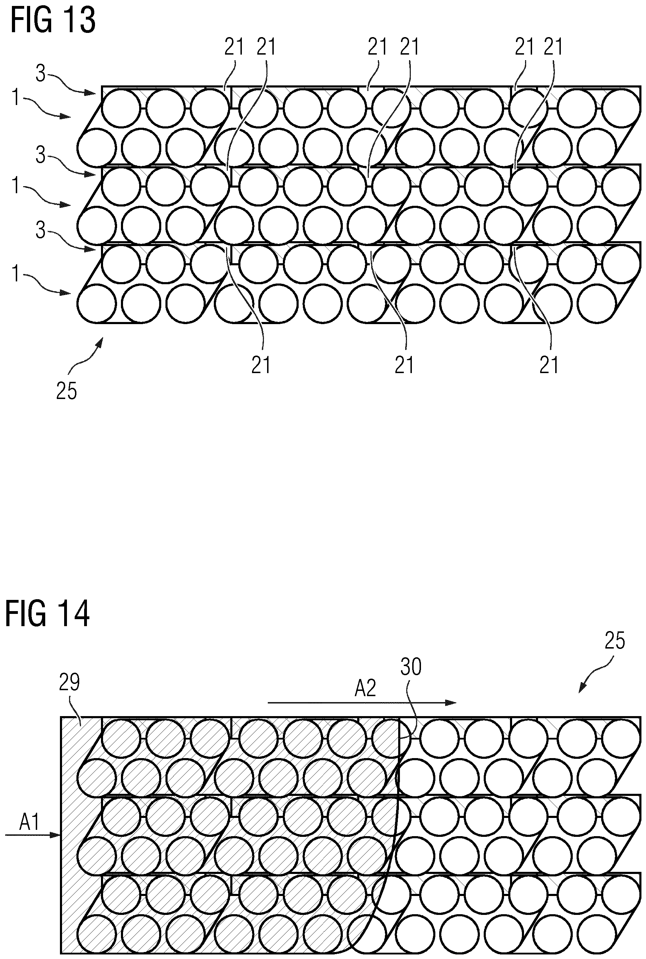

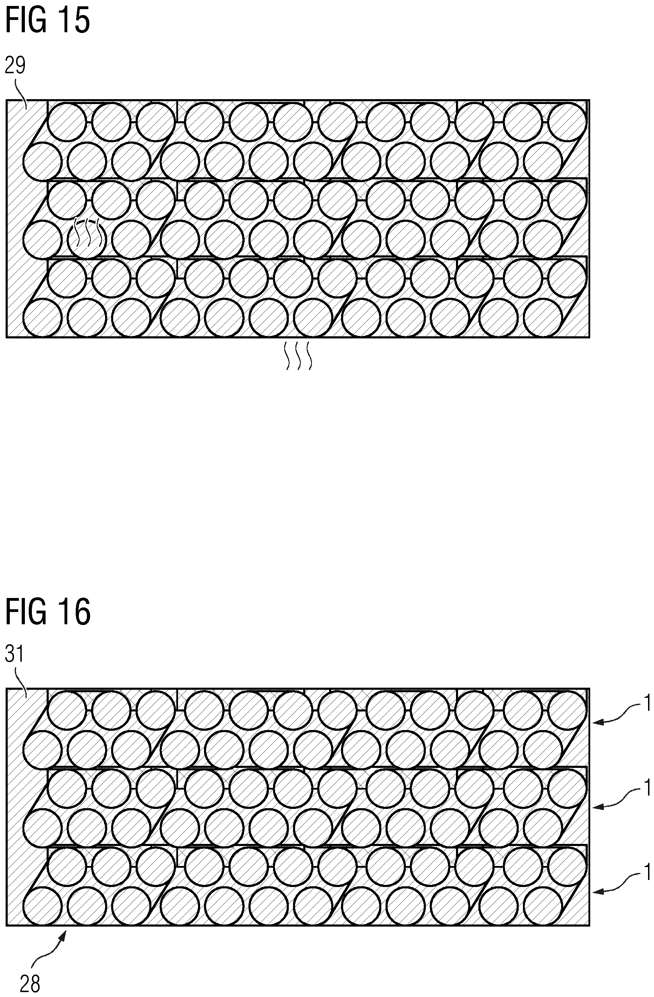

The figures 12 to 16 showed principal sketches of the production of a preformed element 28, finally shown in figure 16. Figure 12 shows the stack 25 built in this example from three pre-impregnated reinforcement fabric sheets 24, each comprising a reinforcement fabric layer 1 and a polymer film layer 3. As shown by the arrows, pressure is applied, which in the embodiment of figure 11 is applied by the vacuum drawn underneath the vacuum back 26. Simultaneously heat is applied, as already explained and as symbolized by the wave symbol. The heat is controlled such that all perforation holds 21 still remain open. The heated and compressed stack 25 is shown in figure 13. The figure shows, that the respective polymer film layers 3 adhere to the adjacent surface of the adjacent reinforcement fabric layer 1, wherein the respective perforation holes 21 are still open.

Afterwards, as shown by the arrow A1, a liquid polymer matrix 29, a resin typically a two-component reactive epoxy-amine system, is infused in the mold 22 respectively the cavity where the stack 25 is arranged. The liquid resin 29 flows in a defined flow direction, as shown by the arrow A2 through the stack 25. The liquid resin 29 can also flow through the perforation holes 21 in a direction perpendicular to the flow direction A2. The resin flow front 30 slowly proceeds through the stack 25 until it has completely filled the cavity and the stack 25 is completely embedded in the liquid matrix 29.

Afterwards, as shown in figure 15, heat is applied, as symbolized by the wave symbol. The heat ranges between 80°C to 140°C. This temperature is maintained for a defined time, reaching or surpassing the melting temperature of the polymer film layers **3.** Given this and the chemical nature of the polymer material of the polymeric film layer 3, integration into the polymer crosslinked network of the liquid matrix 29 and the dissolution into the same happens to a certain extent or totally, granting a minimum impact on the mechanical properties of the cured resin 29 building a polymer matrix, especially its inter-laminar effects in the final composite apart. By applying heat, which is applied by external means of the mold 22, and by the self-generated reaction heat (exothermic heat) of the curing liquid matrix 29, the polymerization and/or curing of the liquid matrix 29 is achieved. After this heating step, the arrangement is cooled. After this cooling the finally built preformed element comprising a cured polymer matrix 31, in which the reinforcement fabric layers 1 are embedded, can be taken from the mold 22.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Method for producing a pre-impregnated reinforcement fabric for building a preform element, with the steps:
- Building a layer arrangement from a reinforcement fabric layer (1) composed of weaved or stitched fibers (19) and a perforated polymer film layer (3) arranged in contact to the reinforcement fabric layer (1),
- applying heat to the layer arrangement for providing at least a tacky surface of the polymer film layer (3) such that the polymer film layer surface (3) adheres to the contacted reinforcement fabric layer (1),
- cooling the layer arrangement.

2. Method according to claim 1, **characterized in that** the polymer film layer (3) is molten by the application of heat.

3. Method according to claim 1 or 2, **characterized in that** the reinforcement fabric layer (1) is composed of glass fiber bundles (19) or carbon fiber bundles, and/or that the polymer film layer (3) is a thermoplastic, preferbly having an epoxy functional group or more, or polyurethane, acrylic, polycarbonate or polyolefin based.

4. Method according to one of the preceding claims, **characterized in that** the polymer film layer (3) has an areal weight of 4 - 40 g/sqm, especially of 6 - 20 g/sqm and preferably of 8 - 15 g/sqm.

5. Method according to claim one of the preceding claims, **characterized in that** the heat is applied by means of an infrared heating device, a resistance heating device, a microwave heating device or a heated roller (14) contacting the layer arrangement.

6. Method according to one of the preceding claims, **characterized in that** after applying the heat a pressure is applied by means of a pressure roller (16).

7. Method according to one of the preceding claims, **characterized in that** a cooling device (17) blowing cooling air on the layer arrangement is used for cooling the layer arrangement.

8. Method according to one of the preceding claims, **characterized in that** the reinforcement fiber layer (3) is produced in a fiber layer production device (8) and the polymer film layer (3) is provided in form of a roll (4), wherein both the reinforcement fiber layer (1) coming from the fiber layer production device (8) and the polymer film layer (3) being unwound from the roll (4) are arranged above each other on a conveyor belt (7) by means of a tensioning roller (9), whereafter the heat is applied.

9. Method according to one of the claims 1 to 7, **characterized in that** the reinforcement fiber layer (1) is provided in form of a roll (2) and the polymer film layer (3) is provided in form of a roll (4), wherein both the reinforcement fiber layer (1) and the polymer film layer (3) are unwound and arranged above each other on a conveyor belt (7) by means of a tensioning roller (9), whereafter the heat is applied.

10. Method according to claim 8 or 9, **characterized in that** the reinforcement fabric layer (1) and the polymer film layer (3) have the same width (W).

11. Method according to one of the claims 8 to 10, **characterized in that** the cooled layer arrangement is either wound up to build a pre-impregnated fabric roll (12), or that the cooled layer arrangement is cut into single layer arrangement sheets.

12. Reinforcement fabric produced according to the method of one of the preceding claims.

13. Method for producing a preform element for an item being composed of a number of separate preform elements embedded in a polymer matrix, especially a wind turbine blade, with the following steps:
- providing a mold (22) with a mold surface (23),
- arranging a stack (25) of two or more sheets (24) of reinforcement fabrics (11) according to claim 12 on the mold surface (23),
- applying heat to the stack (25) for providing at least a tacky surface of the polymer film layer (3) of each reinforcement fabric sheet (24) such that the polymer film layer surface of a sheet (24) adheres to the contacted fabric layer of an adjacent sheet (24) for fixating the sheets (24),
- cooling the stack.

14. Method according to claim 12, **characterized in that** the stack (25) is heated such that the polymer film layers (3) melt.

15. Preform element produced according to the method of claim 13 or 14.
